# EUROPEAN PATENT APPLICATION

(11) **EP 1 839 986 A1**
(43) Date of publication of application: **03.10.2007**
(21) Application number: 07104966.2
(22) Date of filing: 27.03.2007
(51) Int. Cl.: B60W 20/00

(54) **Driving mode control**

(30) Priority: 29.03.2006 JP 2006090028
(71) Applicant: NISSAN MOTOR COMPANY LIMITED, Yokohama-shi Kanagawa 221-0023 (JP)
(72) Inventor: Ueno, Munetoshi c/o Nissan Technical Centre, Kanagawa 243-0192 (JP)
(74) Representative: Holmes, Matthew William

(57) **Abstract**

A driving mode transition controller is provided for a hybrid vehicle equipped with engine (E), motor-generator (MG), and clutch (CL1) installed between the engine (E) and the motor-generator (MG), wherein the engine is started by engaging the clutch (CL1) and using the motor-generator (MG) as a starter motor for the engine when making a mode transition from an "EV mode" which utilizes only motor-generator MG as the power source to an "HEV mode" which includes the engine E as part of the power source. The controller uses an acceleration intention determination module to control the controls the maximum torque capacity of the clutch (CL1) at the time of clutch engagement such that the weaker a driver's intention to accelerate is determined to be, the lower the rate of engine rpm rise becomes when making the mode transition from EV mode to HEV mode.

## Description

The present invention relates generally to driving mode control and particularly, but not exclusively, to a driving mode transition control apparatus that uses a motor-generator as an engine starter motor and starts the engine by engaging a clutch provided between the engine and the motor-generator when making a mode transition from an electric car mode to a hybrid car mode. Aspects of the invention relate to an apparatus, to a method and to a vehicle.

Japanese Kokai Patent Application No. Hei 11[1999]-82260 discloses a conventional hybrid vehicle in which a first clutch is installed between an engine and a motor-generator and a second clutch is installed between the motor-generator and drive wheels. In this hybrid vehicle, the motor-generator is used as an engine starter motor when making a mode transition from an electric car mode to a hybrid car mode by starting the engine, and the first clutch installed between the engine and the motor-generator is engaged so as to start the engine. In the conventional hybrid vehicle, however, because engine friction and rotational inertia are transmitted to the motor-generator as the engine rpm begins to rise when the engine is started, an engine starting torque offsetting the engine friction and the rotational inertia is required at the motor-generator in addition to the torque necessary for travel in order to start the engine quickly.

Thus, when starting the engine while traveling in the electric car mode using the motor-generator, the torque used as the driving torque ends up being limited to the torque obtained by subtracting the engine starting torque from the maximum torque of the motor-generator. When the first clutch is controlled to engage at high torque capacity in response to an engine start request, in spite of the fact that the driver may not intend to accelerate quickly, the driving torque becomes insufficient because the majority of the torque generated by the motor-generator is transmitted to the engine side, and sufficient travel in the electric car mode cannot be realized, resulting in the problems of increased fuel consumption and reduced drivability.

It is an aim of the invention to address this issue and to improve upon known technology. Other aims and advantages of the invention will become apparent from the following description, claims and drawings.

Aspects of the invention therefore provide an apparatus, a method and a vehicle as claimed in the appended claims.

According to another aspect of the invention there is provided an apparatus for controlling the mode transition in a hybrid vehicle having an engine, a motor-generator and a clutch installed between the engine and the motor-generator to start the engine using the motor-generator, comprising a controller adapted to determine the driver's intention to accelerate based on at least one driving condition; and to engage the clutch to start the engine so that the rate of change in the rpm of the engine when starting is relatively faster when the driver's intention to accelerate is strong than when the driver's intention to accelerate is weak.

In an embodiment, the controller is further adapted to engage the clutch at a maximum torque capacity; and to set the maximum torque capacity higher when the driver's intention to accelerate is strong than when the driver's intention to accelerate is weak.

In an embodiment, the controller is further adapted to determine a travel-enabling torque, wherein the travel-enabling torque is set to a relatively lower torque value when the driver's intention to accelerate is strong then when the driver's intention to accelerate is weak.

In an embodiment, the controller is further adapted to engage the clutch at a maximum torque capacity and to set the maximum torque capacity as a function of the difference between the maximum torque of the motor-generator and the travel-enabling torque.

In an embodiment, the controller is further adapted to detect the torque required by the vehicle, and to engage the clutch when the torque required by the vehicle exceeds the travel-enabling torque.

In an embodiment, the controller is operatively connected to a second clutch installed between the transmission and one of the motor-generator and the engine, and wherein the controller is adapted to transition the second clutch to a slip-engagement state and to set the maximum torque capacity of the first clutch while the second clutch is in the slip-engagement state.

In an embodiment, the controller is further adapted to detect an accelerator pedal opening and an accelerator pedal opening rate of change; and to determine that the driver's intention to accelerate is strong when at least one of: the accelerator pedal opening is equal to or greater than a prescribed accelerator pedal opening threshold value, and the accelerator pedal opening rate of change is equal to or greater than a prescribed accelerator pedal opening rate of change threshold value.

In an embodiment, the controller is further adapted to detect average value of the torque required by the vehicle during a prescribed time period; and to determine that the driver's intention to accelerate is strong when the average value of the torque required by the vehicle is equal to or greater than a prescribed acceleration intention determining threshold value.

In an embodiment, the controller is further adapted to detect the average value of the torque required by the vehicle during a prescribed time period and the value of the torque required by the vehicle; and to determine that the driver's intention to accelerate is strong when the difference between the current torque required by the vehicle and the average value of the torque required by the vehicle is equal to or greater than a prescribed value.

According to yet another aspect of the invention there is provided a hybrid vehicle, comprising an engine, a motor-generator, a clutch installed between the engine and the motor-generator to permit the motor-generator to start the engine and a controller operatively coupled to the clutch and adapted to engage the clutch when a hybrid car mode of vehicle operation is selected, to determine the driver's intention to accelerate based and to set the maximum torque capacity of the clutch as a function of the driver's intention to accelerate; whereby the weaker the driver's intention to accelerate is, the smaller is the proportion of torque used to start the engine relative to the maximum torque that can be generated by the motor-generator.

According to a further aspect of the invention there is provided a hybrid vehicle, comprising an engine, a motor-generator, a first clutch installed between the engine and the motor-generator to permit the motor-generator to start the engine and a controller adapted to determine the driver's intention to accelerate based on at least one driving condition; and to engage the first clutch to start the engine when the vehicle transitions from an electric car mode to a hybrid car mode, wherein the controller sets the maximum torque capacity of the first clutch in response to the driver's intention to accelerate so that the rate of change in the rpm of the engine when starting is relatively slower when the driver's intention to accelerate is weak than when the driver's intention to accelerate is strong.

In an embodiment, the controller is further adapted to determine a travel-enabling torque, wherein the travel-enabling torque is set to a relatively lower torque value when the driver's intention to accelerate is strong then when the driver's intention to accelerate is weak and wherein the controller is further adapted to set the maximum torque capacity of the first clutch as a function of the difference between the maximum torque of the motor-generator and the travel-enabling torque.

In an embodiment, the controller is further adapted to detect the torque required by the vehicle, and to engage the first clutch to start the engine when the torque required by the vehicle exceeds the travel-enabling torque.

In an embodiment, the controller is further adapted to detect an accelerator pedal opening and an accelerator pedal opening rate of change; and to determine that the driver's intention to accelerate is weak when at least one of: the accelerator pedal opening is less than a prescribed accelerator pedal opening threshold value, and the accelerator pedal opening rate of change is less than a prescribed accelerator pedal opening rate of change threshold value.

In an embodiment, the controller is further adapted to detect average value of the torque required by the vehicle during a prescribed time period; and to determine that the driver's intention to accelerate is weak when the average value of the torque required by the vehicle is less than a prescribed acceleration intention determining threshold value.

In an embodiment, the controller is further adapted to detect the average value of the torque required by the vehicle during a prescribed time period and the value of the torque required by the vehicle; and to determine that the driver's intention to accelerate is weak when the difference between the current torque required by the vehicle and the average value of the torque required by the vehicle is less than a prescribed value.

The vehicle may comprise a transmission and a second clutch installed between the transmission and one of the motor-generator and the engine, wherein the controller is operatively coupled to the second clutch and is adapted to transition the second clutch to a slip-engagement state; and to set the maximum torque capacity of the first clutch while the second clutch is in the slip-engagement state.

According to a further aspect of the invention there is provided a method for controlling the mode transition in a hybrid vehicle having an engine, a motor-generator, and a clutch installed between the engine and the motor-generator to start the engine using the motor-generator, comprising determining the driver's intention to accelerate based on at least one vehicle condition and transmitting torque from the motor-generator to the engine via the clutch to start the engine, wherein the amount of torque transmitted from the motor-generator to the engine, relative to the maximum torque of the motor-generator, is set as a function of the driver's intention to accelerate.

The method may comprise setting the maximum torque capacity of the clutch relatively higher when the driver's intention to accelerate is strong than when the driver's intention to accelerate is weak.

In an embodiment, determining the driver's intention to accelerate further comprises detecting an accelerator pedal opening and an accelerator pedal opening rate of change and determining that the driver's intention to accelerate is strong when at least one of: the accelerator pedal opening is equal to or greater than a prescribed accelerator pedal opening threshold value, and the accelerator pedal opening rate of change is equal to or greater than a prescribed accelerator pedal opening rate of change threshold value.

In an embodiment, determining the driver's intention to accelerate further comprises detecting the average value of the torque required by the vehicle during a prescribed time period and determining that the driver's intention to accelerate is strong when the average value of the torque required by the vehicle is equal to or greater than a prescribed acceleration intention determining threshold value.

In an embodiment, determining the strength of the driver's intention to accelerate further comprises detecting the average value of the torque required by the vehicle during a prescribed time period and the value of the current torque required by the vehicle and determining that the driver's intention to accelerate is strong when the difference between the current actual torque required by the vehicle and the average value of the actual torque required by the vehicle is equal to or greater than a prescribed value.

The method may comprise detecting the torque required by the vehicle, setting a travel-enabling torque as a function of the driver's intention to accelerate wherein the travel-enabling torque is set lower when the driver's intention to accelerate is strong than when the driver's intention to accelerate is weak and commencing the transmission of torque from the motor-generator to the engine to start the engine when the actual torque required by the vehicle exceeds the travel-enabling torque.

The method may comprise detecting the actual torque required by the vehicle, setting a travel-enabling torque as a function of the driver's intention to accelerate and setting the maximum capacity of the clutch as a function of the difference of the maximum torque of the motor-generator less the target torque.

For example, an apparatus for controlling the mode transition in a hybrid vehicle having an engine, a motor-generator, and a clutch installed between the engine and the motor-generator to start the engine using the motor-generator may comprise a controller adapted to determine the driver's intention to accelerate based on at least one driving condition. The controller engages the clutch to start the engine so that the rate of change in the rpm of the engine when starting is faster when the driver's intention to accelerate is strong.

A hybrid vehicle may include an engine, a motor-generator, a clutch installed between the engine and the motor-generator to permit the motor-generator to start the engine; and a controller operatively coupled to the clutch and adapted to engage the clutch when the vehicle transitions from electric car mode to hybrid car mode. The controller is adapted to determine the driver's intention to accelerate based on at least one driving condition; and to engage the clutch to start the engine when the vehicle transitions from an electric car mode to a hybrid car mode. The controller sets the maximum torque capacity of the clutch in response to the driver's intention to accelerate so that the rate of change in the rpm of the engine when starting is slower when the driver's intention to accelerate is weak.

A method for controlling the mode transition in a hybrid vehicle having an engine, a motor-generator, and a clutch installed between the engine and the motor-generator to start the engine using the motor-generator may comprise detecting the driver's intention to accelerate and transmitting torque from the motor-generator to the engine via the clutch to start the engine, wherein the amount of torque transmitted from the motor-generator to the engine, relative to the maximum torque of the motor-generator, is set as a function of the driver's intention to accelerate.

In embodiments of the invention a hybrid vehicle driving mode transition controller is provided in which the range of available torque (i.e. the "driving zone") for the electric car mode is set in accordance with the driver's intention to accelerate to improve engine startability when making mode transition from the electric car mode to the hybrid car mode, thus reducing the fuel consumption and improving drivability. Driver's intention is determined based on a predetermined driving condition.

In one embodiment, a hybrid vehicle is equipped with an engine, a motor-generator, and a clutch installed between the engine and the motor-generator, along with a driving mode transition controller that starts the engine by engaging the clutch and using the motor-generator as an engine starter motor when making a mode transition from an electric car mode to a hybrid car mode.

The maximum torque capacity of the clutch at the time of engagement of the clutch is controlled by the driving mode transition controller so that the more slowly the driver intends to accelerate (i.e., the "weaker" the driver's intention to accelerate) is determined to be, the lower the rate of engine rpm rise becomes when making the mode transition from the electric car mode to the hybrid car mode.

That is, when the engine is started while traveling in the electric car mode using the motor-generator, only the torque obtained by subtracting the engine starting torque from the maximum torque of the motor-generator is available as the travel-enabling torque.

In addition, because the engine starting torque transmitted from the motor-generator to the engine is determined based on the maximum torque capacity of the clutch at the time of clutch engagement, travel-enabling torque (= maximum torque - engine starting torque) in the electric car mode is also determined based on the maximum torque capacity of the clutch at the time of clutch engagement.

In other words, when the maximum torque capacity of the clutch at the time of clutch engagement is reduced, the rate of engine rpm rise is reduced, and the driving zone while in the electric car mode is expanded.

On the other hand, when the maximum torque capacity of the clutch at the time of clutch engagement is increased, the rate of engine rpm rise is increased, and the driving zone while in the electric car mode is reduced.

Therefore, when a determination is made that the driver intends to accelerate quickly (i.e. that the driver's intention to accelerate is "strong"), for example, the engine is started quickly by increasing the maximum torque capacity of the clutch at the time of clutch engagement so as to combine the torques of the engine and the motor-generator in order to accelerate using the greater driving force, so that the drivability can be improved.

On the other hand, when a determination is made that the driver's intention to accelerate is weak, for example, the engine is started slowly by reducing the maximum torque capacity of the clutch at the time of clutch engagement so as to expand the driving zone while in the electric car mode, so that the fuel consumption and drivability can be improved.

As a result, when making the mode transition from electric car mode to hybrid car mode, the fuel consumption and the drivability can be improved by assuring setting of the driving zone for the electric car mode in accordance with the driver's intention to accelerate and good engine startability.

Within the scope of this application it is envisaged that the various aspects, embodiments, examples, features and alternatives set out in the preceding paragraphs, in the claims and/or in the following description may be taken individually or in any combination thereof.

The present invention will now be described, by way of example only, with reference to the accompanying drawings in which:
Figure 1 is a system-level block diagram showing a rear-wheel-drive hybrid vehicle equipped with a hybrid vehicle driving mode transition controller in accordance with a first embodiment;
Figure 2 is a control block diagram showing an arithmetic processing program in the integration controller of Figure 1;
Figure 3 is a graph showing an example of a target driving force map used for target driving force computation in the target driving force computation part of Figure 2;
Figure 4 is a graph showing an example of an engine start/stop selection map used for selecting a target mode in the mode selection part of Figure 2;
Figure 5 is a graph showing an example of a target charge/discharge amount map used for target charge/discharge power computation in the target charge/discharge computation part of Figure 2;
Figure 6 is a flow chart showing the driving mode selection processing executed by the integration controller of Figure 1;
Figure 7 is a flow chart showing the control executed while in EV mode by the integration controller of Figure 1;
Figure 8 is a flow chart showing the control executed while in HEV mode by the integration controller of Figure 1;
Figure 9 is a flow chart showing engine start mode processing executed by the integration controller of Figure 1 when making a transition from EV mode to HEV mode;
Figure 10 is a graph showing an example of an engine start/stop selection map which shows an engine start request line when the driver's intention to accelerate is strong and when the driver's intention to accelerate is weak;
Figure 11 is a time chart showing the characteristics in terms of transmission input rpm, motor-generator rpm, engine rpm, motor-generator torque, and first clutch torque capacity when a transition is made from "EV mode" to "HEV mode" (a) when a determination is made that driver's intention to accelerate is strong and (b) when a determination is made that driver's intention to accelerate is weak;
Figure 12 is a diagram showing an outline of the drive system of another example of a rear-wheel-drive hybrid vehicle; and
Figure 13 is a chart showing the portion of the maximum usable torque of the motor-generator which can be used to start the engine (a) when a determination is made that driver's intention to accelerate is strong and (b) when a determination is made that driver's intention to accelerate is weak;

The configuration of a drive system for the hybrid vehicle will be explained first.

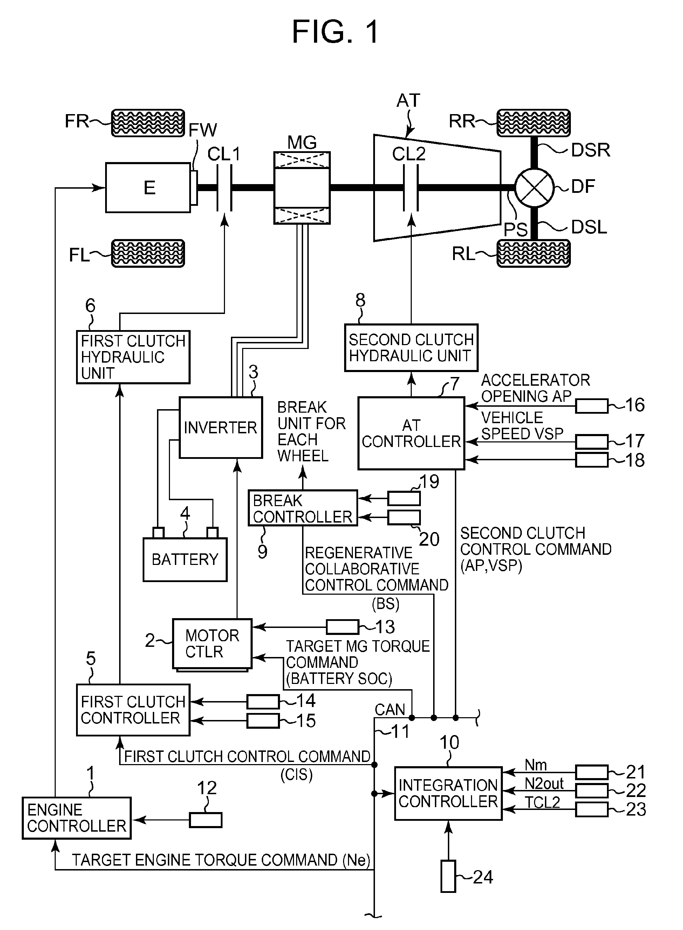

As shown in Figure 1, the hybrid vehicle drive system in the first embodiment has engine E, flywheel FW, first clutch CL1, motor-generator MG, second clutch CL2, automatic transmission AT, propeller shaft PS, differential DF, left drive shaft DSL right drive shaft DSR, left rear wheel RL (drive wheel), and right rear wheel RR (drive wheel). Here, FL represents the left front wheel, and FR represents the right front wheel.

Engine E refers to a gasoline or diesel engine, and opening degree of its throttle valve is controlled according to a control command from engine controller 1 to be described later. Furthermore, the engine output shaft is provided with flywheel FW.

First clutch CL1 is installed between engine E and motor-generator MG, and its engagement and release, including slip-engagement and slip-release, are controlled using a controlling hydraulic pressure generated by first clutch hydraulic unit 6 based on a control command from first clutch controller 5 to be described later. While a conventional clutch can be used as clutch CL1, any mechanism for transferring a variable torque between motor-generator MG and engine E can be employed.

Motor-generator MG is a synchronous motor-generator in which a permanent magnet is embedded in a rotor, and a stator coil is wound around its stator. It is controlled using a 3-phase current generated by inverter 3 based on a control command from motor controller 2 to be described later. The motor-generator MG can operate as an electric motor which rotates upon receiving power from battery 4 (a state to be referred to as "power running," hereinafter), and it can also operate as a generator that generates an electromotive force in the stator coil in order to charge battery 4 (a state referred to as "regeneration," hereinafter). Furthermore, the motor-generator MG is linked to the input shaft of automatic transmission AT via a damper, not shown.

Second clutch CL2 is installed between motor-generator MG and the drive wheels, and its engagement and release, including slip-engagement and slip-release, are controlled using a controlling hydraulic pressure generated by second clutch hydraulic unit 8 based on a control command from AT controller 7 to be described later.

Automatic transmission AT is a transmission for automatically changing multistage gear ratios, for example, 5 speeds forward and 1 speed in reverse, according to a given vehicle speed and an accelerator pedal opening. The previously mentioned second clutch CL2 is not newly added as a dedicated clutch, and several frictional engagement elements out of multiple frictional engagement elements which are engaged at the respective gear stages of automatic transmission AT are diverted to this end. Output shaft of automatic transmission AT is then linked to left and right rear wheels RL and RR via propeller shaft PS, differential DF, left drive shaft DSL, and right drive shaft DSR.

A wet multiplate clutch, whose fluid flow rate and hydraulic pressure can be controlled continuously using a proportional solenoid, can be used for the first clutch CL1 and second clutch CL2.

The hybrid drive system has 2 driving modes depending on the engagement/release state of first clutch CL1.

The state in which first clutch CL1 is released corresponds to the electric car mode (to be abbreviated as "EV mode," hereinafter) in which only the power of motor-generator MG is used as the power source for travel.

The state in which first clutch CL1 is engaged corresponds to the hybrid car mode (to be abbreviated as "HEV mode," hereinafter) in which engine E is included in the power source for travel.

The "HEV mode" comprises 3 driving modes, namely, "engine-based driving mode," "motor-assisted driving mode," and "driving/power generation mode."

In "engine-based driving mode," only engine E is used as the power source for driving the drive wheels.

In the "motor-assisted driving mode," 2 power sources, that is, engine E and motor-generator MG, are used for driving the drive wheels.

In the "driving/power generation mode," drive wheels RR and RL are driven using engine E as the power source, and motor-generator MG functions as a generator at the same time. While traveling at a steady speed and during an acceleration, the power of engine E is used to let motor-generator MG function as a generator. In addition, braking energy is regenerated during deceleration so that motor-generator MG generates electricity to recharge battery 4.

Next, the control system for the hybrid vehicle will be explained. As shown in Figure 1, the hybrid vehicle control system in the first embodiment is configured with engine controller 1, motor controller 2, inverter 3, battery 4, first clutch controller 5, first clutch hydraulic unit 6, AT controller 7, second clutch hydraulic unit 8, brake controller 9, and integration controller 10. Furthermore, engine controller 1, motor controller 2, first clutch controller 5, AT controller 7, brake controller 9, and integration controller 10 are connected to one another via CAN communication line 11 which allows information to be exchanged among them.

Engine controller 1 receives engine rpm information from engine rpm sensor 12 as an input and outputs a command for controlling engine operating point Ne or Te to a throttle valve actuator, not shown, according to a target engine torque command from integration controller 10, for example. Here, the information pertaining to engine rpm Ne is supplied to integration controller 10 via CAN communication line 11.

Motor controller 2 receives information from resolver 13 which detects a given rotational position of the rotor of motor-generator MG as an input, and outputs a command for controlling motor operating point Nm or Tm for motor-generator MG to inverter 3 according to a target motor-generator torque command from integration controller 10. Here, the motor controller 2 monitors the battery SOC which indicates the state of charge of battery 4; this battery SOC information is used for controlling motor-generator MG, and it is also supplied to integration controller 10 via CAN communication line 11.

First clutch controller 5 receives sensor data from first clutch hydraulic pressure sensor 14 and first clutch stroke sensor 15 as inputs and outputs a command for engaging/releasing first clutch CL1 to first clutch hydraulic unit 6 according to a first clutch control command from integration controller 10. Here, the information pertaining to first clutch stroke C1S is supplied to integration controller 10 via CAN communication line 11.

AT controller 7 receives data from accelerator pedal opening sensor 16, vehicle speed sensor 17, and second clutch hydraulic pressure sensor 18 as inputs and outputs a command for engaging/releasing second clutch CL2 to second clutch hydraulic unit 8 provided inside an AT hydraulic control valve according to a second clutch control command from integration controller 10. Here, the data pertaining to accelerator pedal opening AP and vehicle speed VSP are supplied to integration controller 10 via CAN communication line 11.

Brake controller 9 receives data from vehicle speed sensor 19, which detects the respective wheel speeds of the 4 wheels, and brake stroke sensor 20 as inputs and performs regenerative collaborative brake control according to a regenerative collaborative control command from integration controller 10; for example, when the regenerative braking force alone is not sufficient for the required braking force that is obtained from brake stroke BS when the brake is pressed down, a mechanical braking force (a hydraulic braking force and/or a motor-based braking force) is used to compensate for this insufficiency.

Integration controller 10 functions to govern the overall fuel consumption of the vehicle so that the vehicle travels with the optimum efficiency. It receives as inputs data from motor rpm sensor 21 which detects motor rpm Nm, second clutch output rpm sensor 22 which detects second clutch output rpm N2out, second clutch torque sensor 23 which detects second clutch torque TCL2, and brake hydraulic pressure sensor 24 and the data obtained via CAN communication line 11 as inputs.

Integration controller 10 carries out engine E start control using the control command to engine controller 1, motor-generator MG start control using the control command to motor controller 2, first clutch CL1 engagement/release control using the control command to first clutch controller 5, and second clutch engagement/release control CL2 using the control command to AT controller 7.

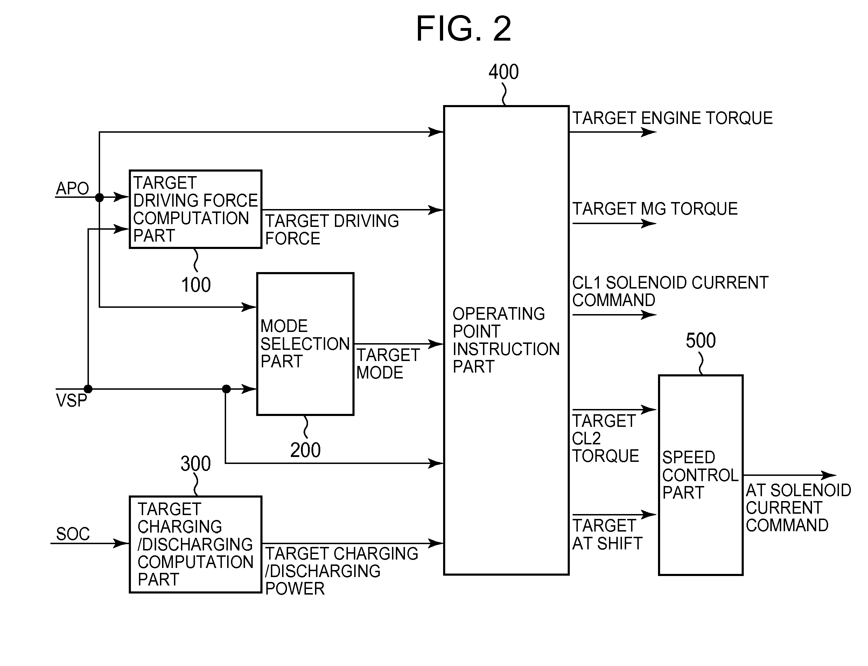

The control computations to be carried out by integration controller 10 in the first embodiment will be explained below using the block diagram shown in Figure 2. For example, the computations are performed by integration controller 10 in every 10 msec control cycle. Integration controller 10 comprises target driving force computation part 100, mode selection part 200, target charge/discharge computation part 300, operating point command part 400, and speed control part 500.

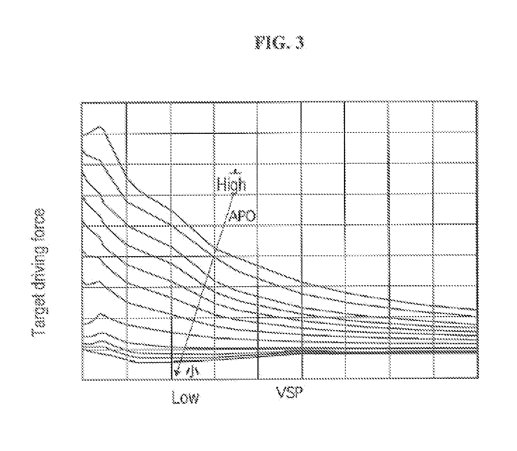

Target driving force computation part 100 computes target driving force tFo0 from accelerator pedal opening APO and vehicle speed VSP using the target driving force map shown in Figure 3.

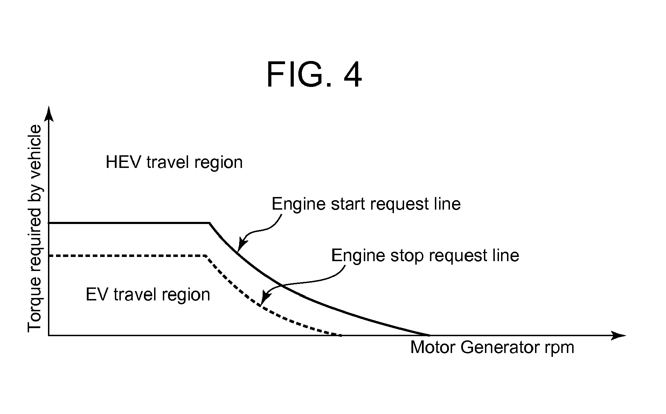

Mode selection part 200 computes a target driving mode from a target engine shaft driving force torque (= torque required by the vehicle), which is computed by dividing the target driving force tFo0 by the gear ratio, and the motor rpm using the engine start/stop selection map shown in Figure 4.

As shown in Figure 4, a request to start engine E is made when the operating point determined based on the torque required by vehicle and the motor rpm has crossed an engine start request line in the engine start/stop map when "EV mode" is selected; and a request to stop engine E is made when the operating point determined based on the torque required by vehicle and the motor rpm has crossed an engine stop request line when "HEV mode" is selected. For a given motor rpm, the value of the torque on the engine start request line is referred to as the "EV travel-enabling torque" or "torque enabling EV travel". EV travel-enabling torque is a threshold value calculated as explained below.

However, if battery SOC is equal to or lower than a prescribed value, a request is made to force engine E to start.

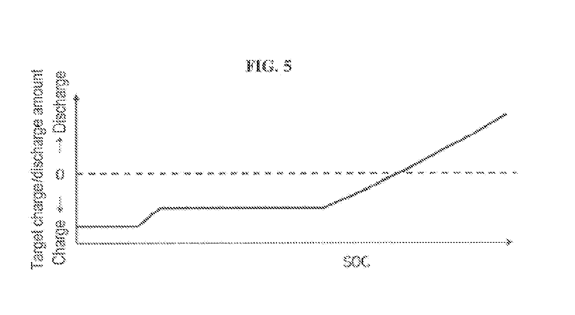

Target charge/discharge computation part 300 computes target charge/discharge power tP from the battery SOC using the target charge/discharge amount map shown in Figure 5.

Operating point command part 400 computes a transitional target engine torque, a target motor-generator torque, a target second clutch torque capacity, a target automatic transmission shift, and a first clutch solenoid current command are based on accelerator pedal opening APO, target driving force tFo0, the target mode, vehicle speed VSP, and target charge/discharge power tP as the targets for reaching the operating points.

In speed control part 500, the target second clutch torque capacity and the target automatic transmission shift are used to drive a solenoid valve provided inside automatic transmission AT in order to achieve them.

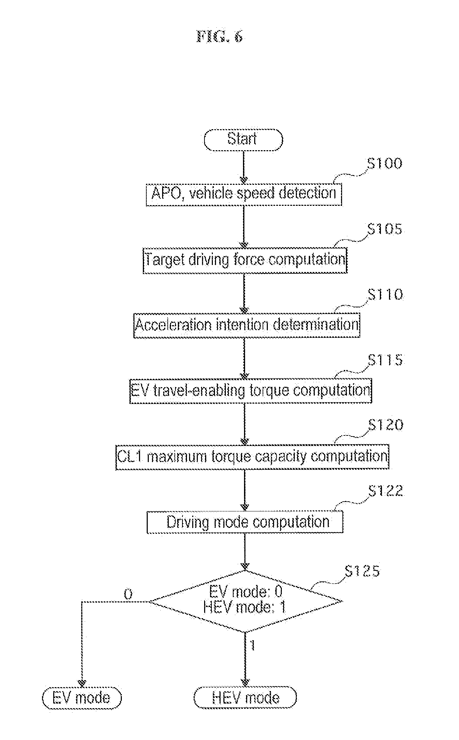

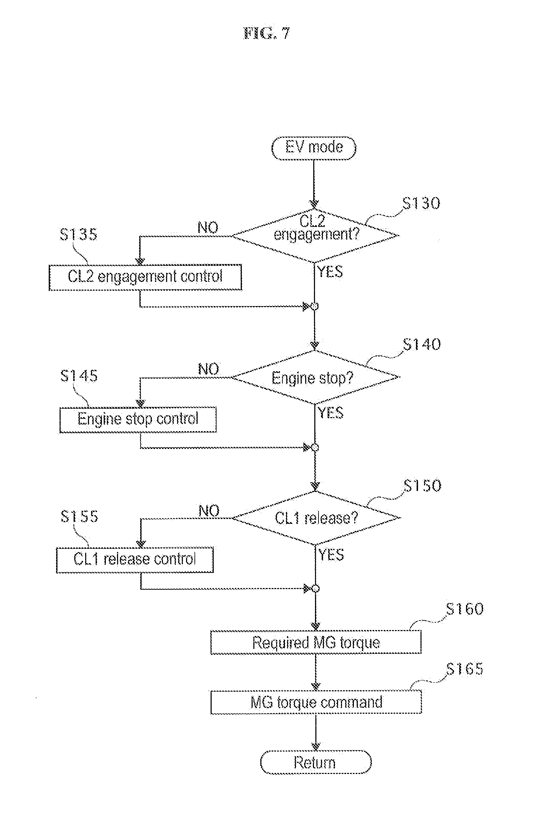

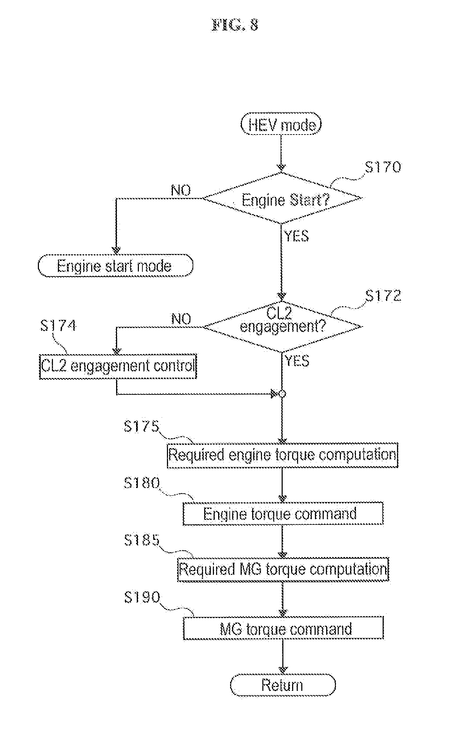

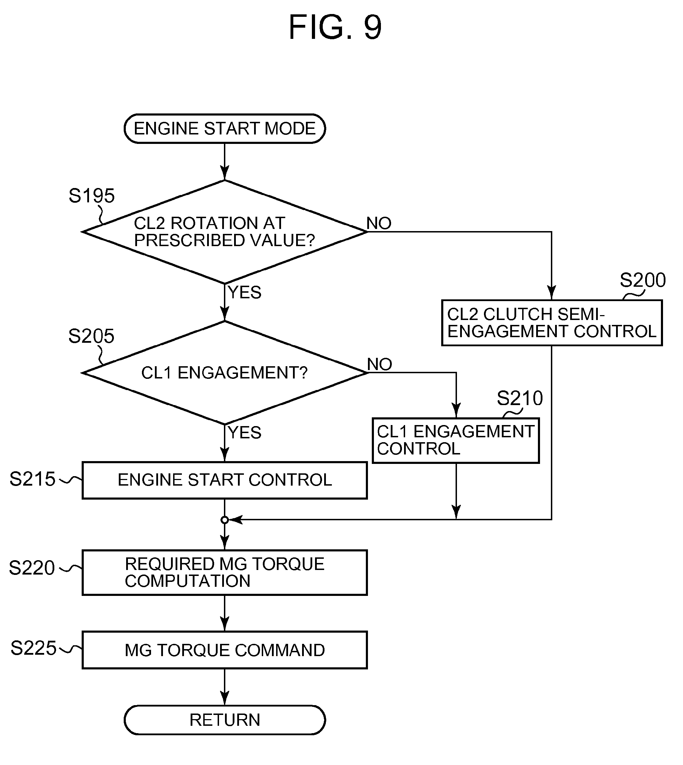

Figures 6-9 are flow charts showing the flow of driving mode transition control processing executed by integration controller 10. Driving mode selection processing (Figure 6), control processing while in the EV mode (Figure 7), control processing while in the HEV mode (Figure 8), and the engine start mode when making the transition from EV mode to HEV mode (Figure 9) will be explained below.

Figure 6 is a flow chart showing the driving mode selection processing executed by integration controller 10. The respective steps will be explained below.

Accelerator pedal opening APO and vehicle speed VSP are detected in Step S100, and process flow continues to Step S105.

Once accelerator pedal opening APO and vehicle speed VSP are detected in Step S100, target driving force tFo0 is computed from accelerator pedal opening APO and vehicle speed VSP in Step S105, and process flow continues to Step S110.

Once the target driving force is computed in Step S105, whether the intention to accelerate is weak or strong is determined in Step S110 (acceleration intention determination module) based on a driving condition, and process flow continues to Step S115.

Here, the intention to accelerate is a measure of how quickly the driver is attempting to make the vehicle accelerate. The intention to accelerate determined based on one or more driving conditions, such as accelerator pedal opening, speed, and torque required by the vehicle, for example. Techniques that can be used to determine driver's intention to accelerate can include one or more of the following:
- Accelerator pedal opening APO and accelerator pedal opening rate of change ΔAPO are detected, and a determination is made that the intention to accelerate is strong when accelerator pedal opening APO is equal to or greater than prescribed accelerator pedal opening threshold value APOth, and accelerator pedal opening rate of change ΔAPO is equal to or greater than prescribed accelerator pedal opening rate of change ΔAPOth.
- The average value of the torque required by the vehicle during a prescribed period of time is determined, a determination is made that the intention to accelerate is strong when the average value of torque required by the vehicle is equal to or greater than a prescribed acceleration intention determination threshold value.
- The average value of the torque required by the vehicle during a prescribed period of time is determined, a determination is made that the intention to accelerate is strong when the difference between the current vehicle required torque and the average value of the vehicle required torque is equal to or greater than a prescribed value.

Once the intention to accelerate is determined in Step S110, in Step S115 the EV travel-enabling torque is set at a rather low torque when the intention to accelerate is strong, or the EV travel-enabling torque is set at a rather high torque when the intention to accelerate is weak, and process flow continues to Step S120 (travel-enabling torque setting module).

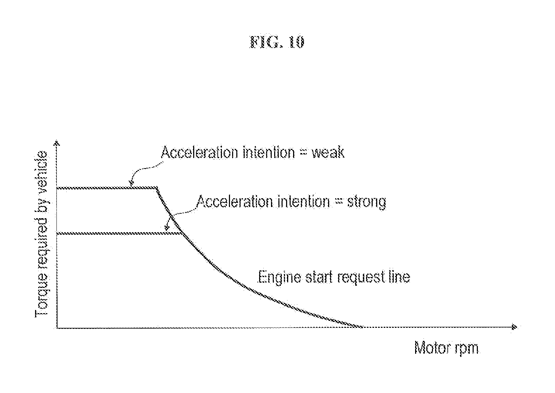

That is, because the EV travel-enabling torque is set according to the intention to accelerate, when engine E is started while traveling in "EV mode" using a motor-generator MG, the engine start request line in the engine start/stop selection map is set such that a request is made to start the engine at a low vehicle required torque value when the intention to accelerate is strong, and a request is made to start the engine at a high vehicle required torque value when the intention to accelerate is weak, as shown in Figure 10.

Once the EV travel-enabling torque is computed in Step S115, the maximum torque capacity of clutch CL1 at the time of engagement of first clutch CL1 is computed in Step S120 by subtracting the EV travel-enabling torque from the maximum torque of motor-generator MG, and process flow continues to Step S122.

Once the maximum torque capacity of clutch CL1 at the time of engagement of clutch CL1 is computed in Step S120, in Step S122 the target engine shaft driving torque is computed by dividing the target driving force tFo0 by the gear ratio, the target engine shaft driving torque and the EV travel-enabling torque are compared, "1" is output when target engine shaft driving torque > EV travel-enabling torque, or "0" is output when target engine shaft driving force ≤ EV travel-enabling torque, and process flow continues to Step S125.

Once the driving mode is computed in Step S122, in Step 125 a transition is made to "EV mode" (Figure 7) when "0" is output as a result of the driving mode computation, or a transition is made to "HEV mode" (Figure 8) when "1" is output as a result of the driving mode computation.

Figure 7 is a flow chart showing the control carried out by integration controller 10 while in EV mode. The respective steps will be explained below.

Whether second clutch CL2 is engaged or not is determined in Step S130; if Yes process flow continues to Step S140, or if No process flow continues to Step S135.

When a determination is made in Step S130 that second clutch CL2 is not engaged, a command is issued in Step S135 to increase the hydraulic pressure applied to second clutch CL2 to engage it, and process flow continues to Step S140.

When a determination is made that clutch CL2 is engaged in Step S130, or after CL2 engagement control is finished in Step S135, whether engine E is stopped or not is determined in Step S140; if Yes process flow continues to Step S150, or if No process flow continues to Step S145.

When a determination is made in Step S140 that engine E is not stopped, a fuel cut-off signal is issued in Step S145, and process flow continues to Step S150.

When a determination is made in Step S140 that the engine is stopped, or after the engine is stopped in Step S145, whether first clutch CL1 is released or not is determined in Step S150; if Yes process flow continues to Step S160, if No or process flow continues to Step S155.

When a determination is made in Step S150 that CL1 is engaged, control is carried out in Step S155 to reduce the hydraulic pressure applied to first clutch CL1 so as to release it, and process flow continues to Step S160.

When a determination is made in Step S150 that CL1 is released, or after CL1 is released in Step S155, the torque required of motor-generator MG is computed in Step S160 from the torque required by the vehicle and the gear ratio, and process flow continues to Step S165.

Once the required MG torque is computed in Step S160, in Step 165 a command for obtaining the required torque from motor-generator MG is output to motor controller 2, and process flow passes to Return.

Figure 8 is a flow chart showing the control executed by integration controller 10 while in the HEV mode. The respective steps will be explained below.

Whether engine E has been started or not is determined in Step S170; if Yes process flow continues to Step S172, or if No a transition is made to the engine start mode (Figure 9).

When a determination is made in Step S170 that the engine has been started, whether or not second clutch CL2 is engaged is determined in Step S172; if Yes process flow continues to Step S175, or if No process flow continues to Step S174.

When a determination is made in Step S172 that CL2 is not engaged, the hydraulic pressure supplied to second clutch CL2 is increased to engage second clutch CL2 in Step S174, and process flow continues to Step S175.

When a determination is made in Step S172 that CL2 is engaged, or after CL2 is engaged in Step S174, the portion of the driving torque required from the engine is computed in Step S175 based on the torque required by the vehicle and the gear ratio, an engine torque for generating electricity is further computed in response to a charge request which reflects the battery SOC shown in Figure 5, and the torque obtained by combining these is used as the torque required of the engine, and process flow continues to Step S180.

Once the required engine torque is computed in Step S175, a torque value obtained by adding an engine E response delay is output as a torque command to engine controller 1 in Step S180, and process flow continues to Step S185.

Once the engine torque command is issued in Step S180, the torque required of motor-generator MG is computed by subtracting the engine torque command value from the target engine shaft driving torque which was computed by dividing the target driving force tFo0 by the gear ratio in Step S185, and process flow continues to Step S190.

Once the required MG torque is computed in Step S185, an MG torque command for obtaining the required MG torque is output to motor controller 2 in Step S190, and process flow passes to Return.

Figure 9 is a flow chart showing the engine start mode processing executed by integration controller 10 when making the transition from EV mode to HEV mode. The respective steps will be explained below.

In Step S195, whether the input-output differential rotation of second clutch CL2 matches a prescribed value or not is determined; if Yes process flow continues to Step S205, or if No process flow continues to Step S200.

When a determination is made in Step S195 that the input-output differential rotation of second clutch CL2 does not match the prescribed value, the hydraulic pressure for engaging second clutch CL2 is reduced in Step S200 to the level at which the target driving force can be transmitted, the torque of motor-generator MG is regulated to bring the differential rotation of second clutch CL2 to the prescribed value, and process flow continues to Step S220.

When a determination is made in Step S195 that the differential rotation of CL2 matches the prescribed value, whether first clutch CL1 is engaged or not is determined in Step S205; if Yes process flow continues to Step S215, or if No process flow continues to Step S210.

When a determination is made in Step S205 that CL1 is not engaged, the hydraulic pressure of first clutch CL1 is increased in Step S210 to engage it, the engine rpm is reduced to an rpm equal to or higher than that at which the engine can be still started, and process flow continues to Step S220.

During the first clutch CL1 engagement control, the hydraulic pressure of first clutch CL1 is controlled such that the maximum torque capacity of clutch CL1 at the time of engagement of CL1 computed in the Step S120 is not exceeded.

When a determination is made in Step S205 that CL1 is engaged, fuel is injected in Step S215 to start engine E, and process flow continues to Step S220.

Following clutch semi-engagement control of CL2 in Step S200, the engagement control of CL1 in Step S210, or the engine start control in Step S215, because the "EV mode" is basically used for traveling while in the engine start mode, the required MG torque is computed in Step S220 from the required vehicle driving force and the gear ratio, and process flow continues to Step S225.

Once the required MG torque is computed in Step S220, an MG torque command for obtaining the required MG torque is output to motor controller 2 in Step S225, and process flow passes to Return.

Next, the operation will be explained.

In a hybrid vehicle in which the clutch is installed between the engine and the motor-generator, the motor-generator is used as a starter motor when making the transition from "EV mode" to "HEV mode" by starting the engine, and the engine is started by engaging the clutch installed between the engine and the motor-generator.

Because engine friction and rotational inertia are transmitted to the motor-generator as the engine rpm begins to rise when the engine is started, an engine starting torque that offsets the engine friction and the rotational inertia is required from the motor-generator, in addition to the torque necessary for travel, in order to start the engine quickly.

Therefore, when starting the engine using the motor-generator while traveling in the "EV mode," the torque used as the driving torque ends up being limited to the torque obtained by subtracting the engine starting torque from the maximum torque of the motor-generator. Thus, when the clutch installed between the engine and the motor-generator is controlled to engage at a high torque capacity in response to an engine start request despite the fact that the driver's intention to accelerate is weak, the driving torque becomes insufficient since the major part of the torque generated by the motor-generator is transmitted to the engine side, and sufficient "EV mode" travel cannot be realized, resulting in the problems of increased fuel consumption and reduced drivability.

Conversely, the hybrid vehicle driving mode transition controller of the first embodiment is designed such that setting a driving zone for the "EV mode" in accordance with the driver's acceleration intentions and good engine startability can be assured when making the transition from "EV mode" to "HEV mode."

That is, because of the fact that because the engine starting torque transmitted from motor-generator MG to engine E is determined based on the maximum torque capacity of clutch CL1 at the time of engagement of first clutch CL1, so that the travel-enabling torque (= maximum torque - engine starting torque) while in "EV mode" can also be determined based on the maximum torque capacity of clutch CL1 at the time of engagement of first clutch CL1, the hybrid vehicle driving mode transition controller of the first embodiment can control the maximum torque capacity of clutch CL1 at the time of engagement of first clutch CL1 such that the weaker the driver's intention to accelerate is determined to be, the lower the rate of engine rpm rise becomes when making the transition from "EV mode" to "HEV mode."

Therefore, when a determination is made that the driver's intention to accelerate is strong, the maximum torque capacity of clutch CL1 at the time of engagement of first clutch CL1 is increased so that the rate of change in the rpm of the engine when starting is faster. This starts the engine more quickly and reduces the driving zone using the "EV mode." Because the engine is started more quickly, the torques of engine E and motor-generator MG are combined in order to accelerate using the greater driving force, so that the drivability can be improved.

On the other hand, when a determination is made that the driver's intention to accelerate is weak, engine E is started slowly by reducing the maximum torque capacity of clutch CL1 at the time of engagement of first clutch CL1 so as to expand the driving zone using the "EV mode," so that fuel consumption and drivability can be improved.

As a result, when making the transition from "EV mode" to "HEV mode," fuel consumption and drivability can be improved by assuring the setting of the "EV mode" driving zone in accordance with the driver's intention to accelerate and good engine startability (see Figure 10).

"Driving mode transition control operation," "driving mode transition control function when the intention to accelerate is determined to be strong," and ""driving mode transition control function when the intention to accelerate is determined to be weak" for the hybrid vehicle driving mode transition controller of the first embodiment will be explained below.

While traveling, process flow advances from Step S100 → Step S105 → Step S110 → Step S115 → Step S120 → Step S122 in the flow chart in Figure 6. In Step S122, the target engine shaft driving torque is computed by dividing target driving force tFo0 by the gear ratio, and the target engine shaft driving torque and the EV travel-enabling torque are compared, whereby "1" is output when the target engine shaft driving torque > EV travel-enabling torque, or "0" is output when the target engine shaft driving torque ≤ EV travel-enabling torque. In the next step, that is, Step S125, a transition is made to the "EV mode" (Figure 7) if "0" is output as a result of the driving mode computation, or a transition is made to the "HEV mode" (Figure 8) if "1" is output as a result of the driving mode computation.

First, when the target engine shaft driving torque ≤ EV travel-enabling torque, and "EV mode" is selected, process flow advances from Step S130 → (Step S135) → Step S140 (Step S145) → Step 150 (Step S155); process flow advances to Step S160 when the conditions that second clutch CL2 is engaged, the engine is stopped, and first clutch CL1 is released are met; the torque required of motor-generator MG is computed from the torque required by the vehicle and the gear ratio; and a command for obtaining the torque required of motor-generator MG is output to motor controller 2 in the next step, that is, Step S165.

Then, when "HEV mode" is selected because the condition that the target engine shaft driving torque > EV travel-enabling torque is realized while traveling in the "EV mode," process flow advances from Step S170 to the engine start mode in the flow chart in Figure 8.

In the engine start mode, when the differential rotation of second clutch CL2 does not match the prescribed value, process flow advances from Step S195 → Step S200 → Step S220 → Step S225 in the flow chart in Figure 9. In Step S200, the hydraulic pressure for engaging second clutch CL2 is reduced to the level at which the target driving force can be transmitted so as to control the torque of motor-generator MG such that the differential rotation of second clutch CL2 matches the prescribed value.

Next, when the differential rotation of second clutch CL2 matches the prescribed value, and first clutch CL1 is not engaged while in the engine start mode, process flow advances from Step S195 → Step S205 → Step S210 → Step S220 → Step S225 in the flow chart in Figure 9. In Step S210, the hydraulic pressure of first clutch CL1 is increased to engage it, and the engine rpm is brought up to the rpm at which the engine can be started. During the first clutch CL1 engagement control, the hydraulic pressure of first clutch CL1 is controlled such that the maximum torque capacity of clutch CL1 at the time of engagement of CL1 computed in Step S120 is not exceeded.

Next, when the differential rotation of second clutch CL2 matches the prescribed value, and first clutch CL1 is engaged while in the engine start mode, process flow advances from Step S195 → Step S205 → Step S215 → Step S220 → Step S225 in the flow chart in Figure 9, with fuel being injected in Step S215 to start engine E.

Furthermore, because the "EV mode" is basically used for traveling while in the engine start mode, the required MG torque is computed from the required vehicle driving force and the gear ratio in Step S220, and an MG torque command for obtaining the required MG torque is output to motor controller 2 in Step S225.

On the other hand, once the engine is started, process flow advances from Step S170 → Step S172 → (Step S174) → Step S175 → Step S180 → Step S185 → Step S190 in the flow chart in Figure 8.

That is, the required engine torque is computed in Step S175, a torque value obtained by adding a response delay of engine E is output as a torque command to engine controller 1 in Step S180, the required MG torque is computed in Step S185, and an MG torque command for obtaining the required MG torque is output to motor controller 2 in Step S190.

When a determination is made in Step S110 that the driver's intention to accelerate is strong when the driver presses the accelerator pedal down abruptly while traveling in "EV mode," for example, the EV travel-enabling torque is set at a rather low torque value in the next step, that is, Step S115, based on the determination that the driver's intention to accelerate is strong.

Then, in the next step, that is, Step S120, the maximum torque capacity of clutch CL1 at the time of engagement of first clutch CL1, based on the high value, is computed by subtracting the EV travel-enabling torque, based on the rather low torque value of the maximum torque of motor-generator MG, and a torque command for obtaining the maximum torque capacity of clutch CL1 at the time of engagement of first clutch CL1 based on the high value is output to first clutch controller 6 under the engine start mode.

That is, to start engine E while traveling in the "EV mode" using a motor-generator MG by selecting the EV travel-enabling torque based on the low value when the driver's intention to accelerate is strong, a request to start the engine is made when the torque required by the vehicle is low, and the timing for starting the engine is advanced as shown in Figure 9.

In addition, because clutch engagement control is performed to obtain the maximum torque capacity of clutch CL1 at the time of engagement of first clutch CL1, based on the high value, while in the engine start mode, an engine starting torque for offsetting the engine friction and the rotational inertia is transmitted from motor-generator MG to engine E via first clutch CL1 in order to start engine E quickly.

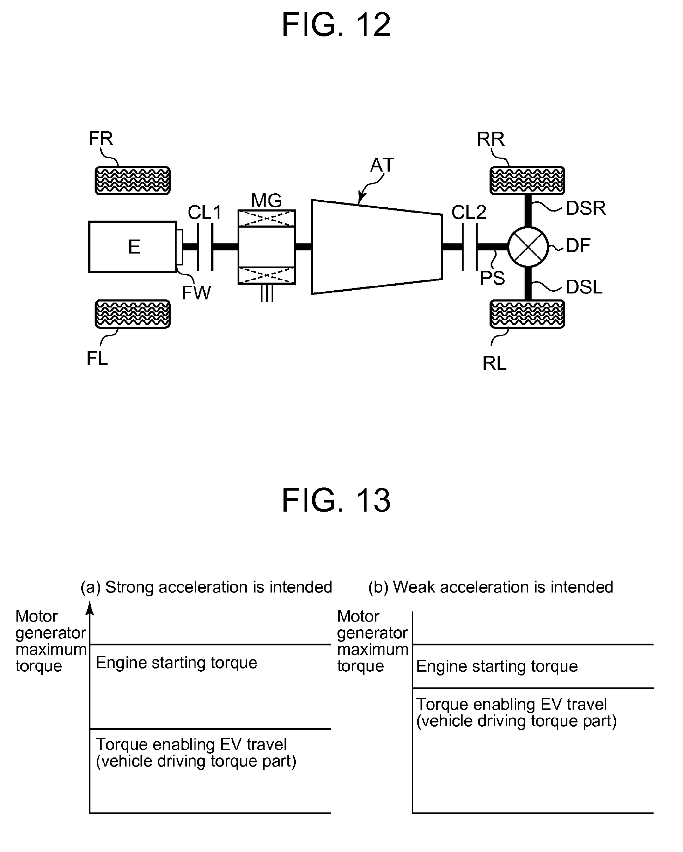

As shown in Figure 13 (a) and (b), this means that the portion of the maximum usable torque of the motor-generator which can be used to start the engine is increased, and the EV travel-enabling torque is reduced when the driver's intention to accelerate is strong as opposed to when the driver's intention to accelerate is weak.

Therefore, when the driver's intention to accelerate is determined to be strong, the rate of engine E rpm rise is increased to reduce the "EV mode" zone in order to achieve the mode transition to the "HEV mode" highly responsively, so that a large driving force reflecting the intention to accelerate, as indicated by driver operation of the accelerator, can be used to accelerate, resulting in improved drivability.

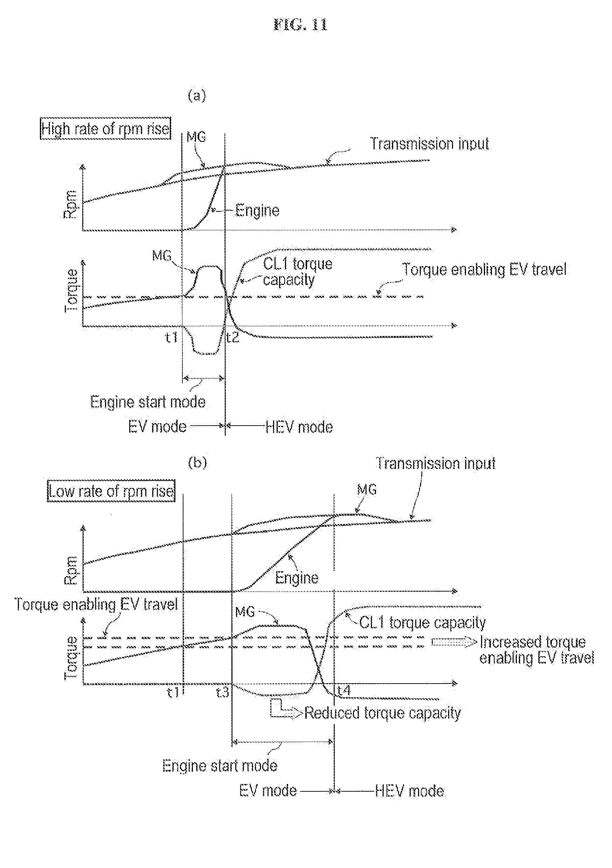

Figure 11 (a) provides time charts showing characteristics in terms of transmission input rpm, motor-generator rpm, engine rpm, motor-generator torque, and first clutch torque capacity when a mode transition is made from "EV mode" to "HEV mode" if a determination is made that the driver's intention to accelerate is strong.

Because control for obtaining maximum torque capacity of clutch CL1 at the time of engagement of first clutch CL1, based on the high value, is executed during the period between time t1, where the driving mode is switched from the "EV mode" to the "HEV mode" when the target engine shaft driving torque exceeds the low EV travel-enabling torque so as to initiate the engine start mode, and time t2, at which the engine start mode is ended, engine E receives the engine starting torque from motor-generator MG so as to increase the engine rpm at a high rate of rise, so that the engine start mode is ended quickly.

In this way, the length of time between time t1, at which the engine start mode is initiated, and time t2, at which the engine start mode is ended, is reduced, so that the narrow zone extending up to time t2, at which the engine start mode is ended, becomes the driving zone using the "EV mode," and the driving mode is switched to "HEV mode" at time t2 when the engine start mode is ended.

When a determination is made in Step S110 that the driver's intention to accelerate is weak because the driver eases up on the accelerator pedal while traveling in the "EV mode," for example, the EV travel-enabling torque is set at a rather high torque value in the next step, that is, Step S115, based on the determination that the driver's intention to accelerate is weak.

Then, in the next step, that is, Step S120, the maximum torque capacity of clutch CL1 at the time of engagement of first clutch CL1, based on the low value, is computed by subtracting the EV travel-enabling torque based on the rather high torque value from motor-generator MG, and a torque command for obtaining the maximum torque capacity of clutch CL1 at the time of engagement of first clutch CL1, based on the low value, is output to first clutch controller 6 under the engine start mode.

That is, to start engine E while traveling in the "EV mode" using a motor-generator MG by selecting the EV travel-enabling torque, based on the high value, when the driver's intention to accelerate is weak, a request to start the engine is made when the torque required by the vehicle is high, and the timing for starting the engine is delayed, as shown in Figure 9.

In addition, because the clutch engagement control for obtaining maximum torque at the time of engagement of first clutch CL1, based on the low value, is carried out in the engine start mode, the engine starting torque transmitted from motor-generator MG to engine E via first clutch CL1 is low, so that it take a long time for engine E to start slowly.

As shown in Figure 13 (a) and (b), this means that the portion of the maximum usable torque of the motor-generator which can be used to start the engine is reduced, and the EV travel-enabling torque is increased when the driver's intention to accelerate is weak as opposed to when the driver's intention to accelerate is strong.

Therefore, when a determination is made that the driver's intention to accelerate is weak, the rate of engine E rpm rise is reduced in accordance with the weak intention to accelerate as indicated by accelerator operation by the driver, so that the "EV mode" zone is expanded, improving fuel consumption and drivability.

Figure 11(b) is a time chart showing the characteristics in terms of transmission input rpm, motor-generator rpm, engine rpm, motor-generator torque, and first clutch torque capacity when a mode transition is made from "EV mode" to "HEV mode" when a determination is made that the driver's intention to accelerate is weak.

First, the driving mode is not switched from "EV mode" to "HEV mode" even at time t1, when the target engine shaft driving torque has exceeded the low EV travel-enabling torque, such as would be required if the driver's intention to accelerate were strong. The driving mode is switched from "EV mode" to "HEV mode" at time t3, when the target engine shaft driving torque has exceeded the high EV travel-enabling torque, as is required when the driver's intention to accelerate is weak, and control for obtaining the maximum torque capacity of clutch CL1 at the time of engagement of first clutch CL1, based on the low value, is executed during the period of time between time t3, at which the engine start mode is initiated, and time t4 at which the engine start mode is ended. In this way, engine E receives lower engine starting torque from motor-generator MG, so that the engine rpm increases gradually, and it takes a longer time to end the engine start mode.

Therefore, time t3, at which the engine start mode is initiated, comes later than time t1 at which the engine start mode is initiated when the driver's intention to accelerate is strong. In addition, the length of time between time t3, at which the engine start mode is initiated, and time t4, at which the engine start mode is ended, becomes longer than the duration of time between t1, at which the engine start mode is initiated, and time t2, at which the engine start mode is ended, when the driver's intention to accelerate is strong. Thus, the expanded zone extending up to time t4, at which the engine start mode is ended, becomes the driving zone using the "EV mode"; and the driving mode is switched to the "HEV mode" at time t4 at which the engine start mode is ended.

Next, the effects will be explained.

With the hybrid vehicle driving mode transition controller of the first embodiment, the effects listed below can be achieved.
(1) In a hybrid vehicle equipped with engine E, motor-generator MG, and clutch CL1 installed between engine E and motor-generator MG along with a driving mode transition control module which starts the engine by engaging clutch CL1 and using motor-generator MG as a starter motor for engine E when making a mode transition from "EV mode," which utilizes only motor-generator MG as the power source, to "HEV mode," which includes the engine E as part of the power source, an acceleration intention determination module (Step S110) is provided which determines the driver's acceleration intentions, and the driving mode transition control module (Figures 6-9) controls the maximum torque capacity of clutch CL1 at the time of the engagement of the clutch CL1 such that the weaker the driver's intention to accelerate is determined to be, the lower the rate of engine rpm rise becomes when making the transition from "EV mode" to "HEV mode." Thus, setting the "EV mode" zone in accordance with the driver's intention to accelerate and good engine startability can be assured when making the transition from "EV mode" to "HEV mode," thus improving fuel consumption and drivability.
(2) The acceleration intention determination module (Step S110) determines whether the driver's intention to accelerate is strong or weak, and the driving mode transition control module (Figures 6-9) sets the maximum torque at the time of engagement of clutch CL1 low when the driver's intention to accelerate is weak, or it sets the maximum torque at the time of engagement of clutch CL1 high when the driver's intention to accelerate is strong when making the transition from "EV mode" to "HEV mode." Thus, when making the mode transition from "EV mode" to HEV mode," the "EV mode" zone is reduced when the driver's intention to accelerate is strong so as to generate a driving force in accordance with the intention to accelerate in order to improve the drivability, or engine E is started slowly when the driver's intention to accelerate is weak so as to expand the "EV mode" zone in order to improve both fuel economy and drivability.
(3) A travel-enabling torque setting module is provided (Step S115) which sets the travel-enabling torque in the "EV mode" at a rather low torque value when the intention to accelerate is strong and sets the travel-enabling torque in the "EV mode" at a rather high torque value when the intention to accelerate is weak, and the driving mode transition control module (Figures 6-9) computes the maximum torque capacity of clutch CL1 at the time of engagement of the clutch CL1 by subtracting the travel-enabling torque in the "EV mode" from the maximum torque of motor-generator MG when making the transition from "EV mode" to "HEV mode." Thus, the "EV mode" zone can be expanded when the timing for initiating the engine start mode is delayed so as to reduce the rate of engine rpm rise when the driver's intention to accelerate is weak as opposed to when it is strong, so that fuel economy and drivability can be improved in accordance with the weakness of the driver's intention to accelerate.
(4) In the hybrid vehicle, the hybrid drive system is configured by installing first clutch CL1 between engine E and motor-generator MG, and second clutch CL2 between motor-generator MG and drive wheels RR and RL; the driving mode transition control module (Figures 6-9) brings second clutch CL2 into the slip-engagement state (Step S200), controls the maximum torque capacity of clutch CL1 at the time of engagement of first clutch CL1 while second clutch CL2 is in the slip-engagement state (Step S210), and starts the engine while first clutch CL1 is engaged without exceeding the maximum engagement torque when making the transition from "EV mode" to "HEV mode." Thus, when making the mode transition from the "EV mode" to the "HEV mode," an engine start mode can be obtained in which the shock related to starting the engine is minimized by bringing second clutch CL2 to the slip-engagement state; and fuel consumption and drivability can be improved by assuring setting of the "EV mode" zone in accordance with the driver's intention to accelerate and good engine startability. When a transition from EV mode to HEV mode occurs, the control module transmits torque from the motor-generator to the engine via the clutch to start the engine, wherein the amount of torque transmitted from the motor-generator to the engine, relative to the maximum torque of the motor-generator, is set as a function of the driver's intention to accelerate.
(5) The acceleration intention determination module (Step S110) detects accelerator pedal opening APO and accelerator pedal opening rate of change ΔAPO; it thereby determines that the intention to accelerate is strong when accelerator pedal opening APO is equal to or greater than a prescribed accelerator pedal opening threshold value APOth, and accelerator pedal opening rate of change ΔAPO is equal to or greater than a prescribed accelerator pedal opening rate of change ΔAPOth. Thus, the determination that the driver's intention to accelerate is strong can be made highly accurately based on the amount that the accelerator pedal is pressed down and the speed with which the accelerator is pressed down, which reflect the driver's intention to accelerate.
(6) The acceleration intention determination module (Step S110) detects the average value of the torque required by the vehicle during a prescribed period of time and determines that the intention to accelerate is strong when the average value of the torque required by the vehicle is equal to or greater than a prescribed acceleration intention determination threshold value. Thus, the determination that the driver's intention to accelerate is strong can be made highly accurately based on the average value of the torque required by the vehicle that indicates the driver's intention to accelerate while traveling in the "EV mode."
(7) The acceleration intention determination module (Step S110) detects the average value of the torque required by the vehicle during a prescribed period of time and determines that the intention to accelerate is strong when the difference between the current torque required by the vehicle and the average value of the torque required by the vehicle is equal to or greater than a prescribed value. Thus, the determination that the driver's intention to accelerate is strong can be made highly accurately based on the difference between the current torque required by the vehicle, which is an indicator of the driver's intention to obtain an intermediate level of acceleration by pressing down the accelerator pedal while traveling in the "EV mode," and the average value of the torque required by the vehicle.

Although an example was shown in the first embodiment in which the maximum torque at the time of engagement of the first clutch is controlled by the driving mode transition control module based on whether the driver's intention to accelerate is weak or strong, multistage control involving 3 or more stages or stageless control can be adopted in place of 2-stage control. In addition, although an example was shown in the first embodiment in which the driving mode transition control module sets the "EV mode" travel-enabling torque at a rather low torque value when the intention to accelerate is strong and sets the "EV mode" travel-enabling torque at a rather high torque value when the intention to accelerate is weak, the travel-enabling torque can be determined according to the intention to accelerate by means of multistage control involving 3 or more stages, or by stageless control.

In sum, the invention can be practiced with any driving mode transition control module that is capable of controlling the maximum torque capacity of clutch installed between the engine and the motor-generator such that the weaker the driver's intention to accelerate is determined to be, the slower the rate of engine rpm rise becomes when making the mode transition from the "EV mode" to the "HEV mode"

Although an embodiment involving a rear-wheel-drive hybrid vehicle has been shown in the first embodiment, the invention can also be applied to a front-wheel-drive or 4-wheel-drive hybrid vehicle. Although an example in which a clutch built into an automatic transmission was utilized as the second clutch has been shown in the first embodiment, the second clutch can be added between the motor-generator and the transmission, or the second clutch can be installed between the transmission and the drive wheels, as shown in Figure 12. Furthermore, it can also be applied to a hybrid vehicle in which only the first clutch (engine clutch) is installed between the engine and the motor-generator. In sum, it can be applied to any hybrid vehicle equipped with an engine, a motor-generator, and a clutch installed between the engine and the motor-generator, wherein the engine is started by engaging the clutch while using the motor-generator as an engine starter motor when making the mode transition from the electric car mode, in which only the motor-generator is used as the power source, to the hybrid car mode, in which the engine is included as part of the power source.

The driver can be a human, with a subjective intention to accelerate, or a machine that has determined to control the vehicle to achieve a higher or lower rate of acceleration. When the vehicle is controlled by a machine, the machine can communicate its intention to accelerate to integration controller 10, which in such case does not need to rely on APO data.

It will finally be understood that the disclosed embodiments are representative of the invention, but are intended to be illustrative rather than definitive of the invention. The scope of the invention is defined by the following claims.

This application claims priority from Japanese Patent Application No. 2006-090028, filed 29th March 2006, the contents of which are expressly incorporated herein by reference.

## Claims

1. An apparatus for controlling a mode transition in a hybrid vehicle having an engine, a motor-generator and a clutch installed between the engine and the motor-generator for starting the engine using the motor-generator, the apparatus comprising:
control means for determining a driver's intention to accelerate based on at least one driving condition and engaging the clutch to start the engine so that the rate of change in the rpm of the engine when starting is relatively faster when the driver's intention to accelerate is strong than when the driver's intention to accelerate is weak.

2. An apparatus as claimed in claim 1 wherein the control means is arranged to engage the clutch at a maximum torque capacity and to set the maximum torque capacity higher when the driver's intention to accelerate is strong than when the driver's intention to accelerate is weak.

3. An apparatus as claimed in claim 1 or claim 2 wherein the control means is arranged to determine a travel-enabling torque, wherein the travel-enabling torque is set to a relatively lower torque value when the driver's intention to accelerate is strong then when the driver's intention to accelerate is weak.

4. An apparatus as claimed in claim 3, where in the control means is arranged to engage the clutch at a maximum torque capacity and to set the maximum torque capacity as a function of the difference between the maximum torque of the motor-generator and the travel-enabling torque.

5. An apparatus as claimed in claim 3 or claim 4 wherein the control means is arranged to detect the torque required by the vehicle and to engage the clutch when the torque required by the vehicle exceeds the travel-enabling torque.

6. An apparatus as claimed in claim 2 or any claim dependent on claim 2 wherein the control means is operatively connected to a second clutch installed between the transmission and one of the motor-generator and the engine and is arranged to transition the second clutch to a slip-engagement state and to set the maximum torque capacity of the first clutch while the second clutch is in the slip-engagement state.

7. An apparatus as claimed in any preceding claim wherein the control means is arranged to detect an accelerator pedal opening and an accelerator pedal opening rate of change and to determine that the driver's intention to accelerate is strong when the accelerator pedal opening is equal to or greater than a prescribed accelerator pedal opening threshold value and/or the accelerator pedal opening rate of change is equal to or greater than a prescribed accelerator pedal opening rate of change threshold value.

8. An apparatus as claimed in any preceding claim wherein the control means is arranged to detect average value of the torque required by the vehicle during a prescribed time period and to determine that the driver's intention to accelerate is strong when the average value of the torque required by the vehicle is equal to or greater than a prescribed acceleration intention determining threshold value.

9. An apparatus as claimed in any preceding claim wherein the control means is arranged to detect the average value of the torque required by the vehicle during a prescribed time period and the value of the torque required by the vehicle; and to determine that the driver's intention to accelerate is strong when the difference between the current torque required by the vehicle and the average value of the torque required by the vehicle is equal to or greater than a prescribed value.

10. A method for controlling mode transition in a hybrid vehicle having an engine, a motor-generator, and a clutch installed between the engine and the motor-generator to start the engine using the motor-generator, the method comprising:
determining the driver's intention to accelerate based on at least one vehicle condition; and
transmitting torque from the motor-generator to the engine via the clutch to start the engine, wherein the amount of torque transmitted from the motor-generator to the engine, relative to the maximum torque of the motor-generator, is set as a function of the driver's intention to accelerate.

11. A method as claimed in claim 10 comprising setting the maximum torque capacity of the clutch relatively higher when the driver's intention to accelerate is strong than when the driver's intention to accelerate is weak.

12. A method as claimed in claim 10 or claim 11 wherein determining the driver's intention to accelerate further comprises:
detecting an accelerator pedal opening and an accelerator pedal opening rate of change; and
determining that the driver's intention to accelerate is strong when at least one of: the accelerator pedal opening is equal to or greater than a prescribed accelerator pedal opening threshold value, and the accelerator pedal opening rate of change is equal to or greater than a prescribed accelerator pedal opening rate of change threshold value.

13. A method as claimed in any of claims 10 to 12 wherein determining the driver's intention to accelerate further comprises:
detecting the average value of the torque required by the vehicle during a prescribed time period; and
determining that the driver's intention to accelerate is strong when the average value of the torque required by the vehicle is equal to or greater than a prescribed acceleration intention determining threshold value.

14. A method as claimed in any of claims 10 to 13 wherein determining the strength of the driver's intention to accelerate further comprises:
detecting the average value of the torque required by the vehicle during a prescribed time period and the value of the current torque required by the vehicle, and
determining that the driver's intention to accelerate is strong when the difference between the current actual torque required by the vehicle and the average value of the actual torque required by the vehicle is equal to or greater than a prescribed value.

15. A vehicle having an apparatus or adapted to use a method as claimed in any preceding claim.
